# EUROPÄISCHE PATENTSCHRIFT

(11) **EP 0 530 755 B1**
(45) Veröffentlichungstag und Bekanntmachung des Hinweises auf die Patenterteilung: **24.04.1996**
(21) Anmeldenummer: 92114945.6
(22) Anmeldetag: 02.09.1992
(51) Int. Cl.: B60G 17/01

(54) **Niveauregelung für Kraftfahrzeuge**
Level control system for motor vehicles
Système de contrôle d'assiette pour véhicules automobiles

(30) Priorität: 06.09.1991 DE 4129610
(43) Veröffentlichungstag der Anmeldung: 10.03.1993
(73) Patentinhaber: ITT Automotive Europe GmbH, D-60488 Frankfurt (DE)
(72) Erfinder: Eckert, Alfred, W-6050 Mainz-Laubenheim (DE); Hoffmann, Michael, W-3550 Marburg/Lahn (DE); Schmitt, Stefan, W-6228 Eltville 1 (DE)

(56) Entgegenhaltungen:
- EP-A- 0 219 864
- EP-A- 0 416 560
- DE-A- 3 935 991
- DE-A- 4 003 188
- US-A- 4 948 166

## Beschreibung

Die Erfindung bezieht sich auf ein Niveauregelsystem für Kraftfahrzeuge, bestehend im wesentlichen aus Schwingungsdämpfern, die zwischen den einzelnen Rädern und dem Fahrzeugaufbau angeordnet sind, aus elektrisch betätigbaren Ventilen, mit denen ein Druckmittelfluß zwischen einer Druckquelle einem drucklosen Speicher, den Schwingungsdämpfern und den einzelnen Schwingungsdämpfern zugeordneten Druckbehaltern steuerbar ist, aus Wegsensoren zur Ermittlung der Aufbauhöhe und Aufbaubewegungen, aus Sensoren zur direkten oder indirekten Ermittlung der Längs- und der Querbeschleunigung des Fahrzeugaufbaus sowie aus einer elektrischen Schaltungsanordnung, die die Längs-und Querbeschleunigung auswertende Schaltkreise und eine Regelschaltung enthält, welche in Abhängigkeit von einem Sollwert der Aufbauhöhe und dem Istwert der Aufbauhöhe des Fahrzeugs unter Berücksichtigung einer zulässigen Abweichung zwischen Soll- und Istwert Signale für die Betätigung der Ventile erzeugt, wobei der Sollwert der Aufbauhöhe (s_{d}) nach Betrag und Richtung in Abhängigkeit von den ausgewerteten Sensorsignalen variierbar ist.

Niveauregelsysteme für Kraftfahrzeuge sind bekannt. Sie dienen zum Ausgleich von unerwünschten Niveauänderungen infolge von Beladungsänderungen, Fahrbahnerregungen und bestimmten Fahrmanövern. Während instationäre Zustände, z.B. Schwingungsvorgänge, durch eine Dämpfkraftregelung zu beheben sind, können Aufbaubewegungen bei stationären Längs-und/oder Querbeschleunigungen durch Schwingungsdämpfung nicht verändert oder beeinflußt werden. Zur Überwindung solcher stationärer Zustände, wie Querneigungen bei Kurvenfahrt und des Brems- und Anfahrnickens, ist die "klassische" aktive Fahrwerksregelung bekannt, bei der Hydraulikzylinder in Verbindung mit einer Energiequelle die konventionellen Feder-/Dämpferelemente ersetzen und bei der über einen Lageregelkreis die Horizontierung des Fahrzeugs bzw. die Niveauregelung erfolgt. Die bisher verwirklichten Systeme dieser Art verwenden teure, schnellschaltende Servoventile und besitzen einen hohen Energiebedarf. Da nur Reaktionen, nämlich Bewegungen des Fahrzeugs, und nicht Aktionen, wie Lenkmanöver, sensiert werden, treten in manchen Fällen Totzeitprobleme auf.

Aus der DE 39 35 991 A1 ist auch bereits ein Niveauregelsystem der eingangs genannten Art bekannt. Dieses Niveauregelsystem enthält einen die Längs- und Querbeschleunigung des Fahrzeugaufbaus auswertenden Schaltkreis, der eine Fahrzeugniveau-Korrekturgröße erzeugt. In einer Regelschaltung werden die Dämpferventil-Ansteuerungssignale in Abhängigkeit von der sensierten

Vertikalbeschleunigung des Fahrzeugaufbaus, der Sollhöhe und der Isthöhe des Fahrzeugaufbaus unter Berücksichtigung der Fahrzeugniveau-Korrekturgröße durch Addition der einzelnen Komponenten gebildet.

In der europäischen Patentschrift Nr. 219 864 ist ein Niveauregelsystem beschrieben, mit dem die durch das Lenken hervorgerufene Rollbewegung des Fahrzeugs unterdrückt werden soll. Hierzu errechnet die zugehörige Rechen- und Steuereinrichtung aus der Fahrzeuggeschwindigkeit und dem Lenkwinkel einen sogenannten Voraussage-Rollwinkel für den Fahrzeugaufbau. Wenn der Absolutwert des Voraussage-Rollwinkels größer wird als ein vorgegebener Schwellwert, werden Steuersignale zur Verkleinerung des Rollwinkels ausgegeben. Es handelt sich hierbei um eine Steuerung, keine Regelung, weil keine Rückführung des dem tatsächlichen Rollwinkel entsprechenden Signals erfolgt. Ist der Voraussage-Rollwinkel kleiner als der Schwellwert, wird das Fahrzeugniveau in Abhängigkeit von der Differenz zwischen dem Ist- und dem Sollwert der Fahrzeughöhe in einem vorbestimmten Bereich gehalten; Regelgröße ist in diesem Fall nicht der Voraussage-Rollwinkel, sondern die Höhendifferenz.

Der Erfindung liegt nun die Aufgabe zugrunde, ein Niveauregelsystem zu schaffen, das Situationen, die das Fahrzeugniveau beeinflussen, schnell erkennt und in geeigneter Weise auf diese Einflüsse reagiert. Das System soll hohe Regelgüte mit geringem Leistungsbedarf vereinen, und es soll mit relativ geringem Herstellungsaufwand zu realisieren sein.

Es hat sich herausgestellt, daß diese Aufgabe durch das im Anspruch 1 beschriebene Niveauregelsystem gelöst werden kann, dessen Besonderheit darin besteht, daß der die Längs- und Querbeschleunigungssignale auswertende Schaltkreis die zeitliche Änderung der Längs- und der Querbeschleunigung, den sogen. Ruck, des Fahrzeugaufbaues ermittelt und ein Ausgangssignal erzeugt, das der Regelschaltung zugeführt wird und den Sollwert der Aufbauhöhe verschiebt, wenn der Ruck einen Schwellwert überschreitet, wobei die Verschiebungsrichtung von der Änderungsrichtung abhängig ist, und daß in einem weiteren Schaltkreis zur Auswertung der Sensorsignale ein von der Längs- und Querbeschleunigung des Fahrzeugaufbaues abhängiges Ausgangssignal gebildet und der Regelschaltung zugeführt wird, das einen Schwellwert für die zulässige Abweichung des Istwertes von dem Sollwert der Aufbauhöhe oder für die zulässige Regeldifferenz variiert.

Erfindungsgemäß wird also durch die Beobachtung des Rucks schon vor dem Auftreten der Aufbaubewegung erkannt, daß eine Situation vorliegt, in der größere Aufbaubewegungen zu erwarten sind, und durch ein dadurch ausgelöste Verschieben des Sollniveaus ein früheres Einsetzen der Regelung erreicht. Außerdem wird in Abhängigkeit von der Längs- und Querbeschleunigung des Fahrzeugs die zulässige Istwert-/SollwertAbweichung festgelegt, um, je nach Situation, einerseits besonders schnelles Erreichen des Sollwerts zu erzielen und andererseits eine Überkompensation der Wankbewegung zu verhindern.

Nach einem vorteilhaften Ausführungsbeispiel der Erfindung wird der Sollwert der Aufbauhöhe radindividuell um einen vorgegebenen Betrag angehoben bzw. abgesenkt, sobald der Ruck einen vorgegebenen positiven bzw. negativen Schwellwert überschreitet. Es können für die Änderung des Sollwertes der Aufbauhöhe auch verschiedene Schwellwerte in Abhängigkeit von entsprechenden Schwellwerten des Rucks vorgegeben sein.

Ein weiteres Ausführungsbeispiel der Erfindung besteht darin, daß bei einem durch den Schaltkreis, der den Ruck auswertet, hervorgerufenen Verschieben des Aufbauhöhen-Sollwertes die zulässige Regelabweichung von dem Sollwert oder die sog. Regeldifferenz erhalten bleibt. Die zulässige Regelabweichung wird dagegen um einen vorgegebenen Schwellwert, in mehreren Stufen oder auch kontinuierlich in Abhängigkeit von entsprechenden Werten der Längs- und Querbeschleunigung verringert oder erhöht. Eine wesentliche Verbesserung im Vergleich zu bekannten Systemen wird allerdings schon durch die Änderung der zulässigen Regelabweichung in Abhängigkeit von einem einzigen Schwellwert erreicht.

Zweckmäßigerweise werden die Längsbeschleunigung und die Änderung der Längsbeschleunigung des Fahrzeugaufbaus aus den mit Hilfe von Rad- oder Achsdrehzahlsensoren gewonnenen Meßwerten errechnet oder aus diesen Meßwerten abgeleitet. Die Änderung der Längsbeschleunigung des Fahrzeugaufbaus wird aus dem Bremsdruckverlauf, dem Bremspedalweg, aus dem Drosselklappenwinkel des Fahrzeug-Antriebsmotors, aus dem Nickwinkel etc. näherungsweise abgeleitet. Die Querbeschleunigung und die Änderung der Querbeschleunigung des Fahrzeugaufbaus wird nach einem Ausführungsbeispiel der Erfindung aus der Lenkwinkelgeschwindigkeit und der Fahrzeuggeschwindigkeit und/oder aus dem Rollwinkel ermittelt.

Damit die Regelung frühzeitig einsetzen kann, wird nach einem weiteren Ausführungsbeispiel der Erfindung die Druckquelle aktiviert, z.B. durch Einschalten einer Druckmittelpumpe, sobald der Ruck einen vorgegebenen Schwellwert überschreitet. Dies ist bei Systemen ohne einen zentralen Druckspeicher von besonderer Bedeutung.

Zweckmäßigerweise wird das erfindungsgemäße Niveauregelsystem als Vier-Kanal-Regelsystem ausgebildet, wobei an jedem Rad ein Wegsensor angeordnet und die Aufbauhöhe an jedem Rad individuell regelbar ist.

In einer besonders günstigen Ausführungsart besitzt das System ein zentrales Druckversorgungssystem mit einer elektromotorisch angetriebenen Hydraulikpumpe, mit einem zentralen Druckspeicher und mit Hydraulikventilen, die in den Anschlüssen zu der Hydraulikpumpe und zum Druckspeicher sowie in dem Weg zu dem Druckausgleichsbehälter eingefügt sind, wobei das Druckversorgungssystem über je ein in der Ruhestellung gesperrtes, auf Durchlaß umschaltbares Hydraulikventil an die einzelnen Schwingungsdämpfer mit den zugehörigen Druckbehältern angeschlossen ist. Ein solches System benötigt also nur einfache 2/2-Wegeventile.

Nach einem anderen Ausführungsbeispiel der Erfindung besitzt das Vier-Kanal-Niveauregelsystem eine zentrale Druckversorgung mit einer Hydraulikpumpe sowie mit einem Druckausgleichsbehälter, wobei die Druckversorgung über je ein in der Ruhestellung gesperrtes Hydraulikventil an die Schwingungsdämpfer angeschlossen ist. In einer zweiten Schaltstellung des Hydraulikventils ist der Schwingungsdämpfer mit dem Druckausgleichsbehälter und in einer dritten Schaltstellung die Hydraulikpumpe mit dem Schwingungsdämpfer verbunden. In diesem Ausführungsbeispiel sind in einem von der Druckseite der Hydraulikpumpe zu dem Druckausgleichsbehälter führenden Druckmittelweg und unmittelbar vor dem Anschluß des Druckausgleichsbehälters jeweils ein in der Ruhestellung auf Durchlaß geschaltetes Trennventil eingefügt. Außerdem sind an der Druckseite der Hydraulikpumpe und vor dem Trennventil, das zu dem Druckausgleichsbehälter führt, je ein Drucksensor angeordnet.

Schließlich ist nach einer weiteren Ausführungsart der Erfindung das Niveauregelsystem mit einem Überwachungsschaltkreis ausgerüstet, der die mit Hilfe der Wegsensoren ermittelten Aufbauhöhen und Aufbaubewegungen, den Druckverlauf oder Druckänderungen im Niveauregelsystem, z.B. in den einzelnen Druckbehältern oder in einem zentalen Druckspeicher, auswertet und der, wenn auf Fehler hinweisende Meßwerte oder Vergleichswerte auftreten, ein Fehlersignal auslöst, das durch Ansteuern der Hydraulikventile oder Blockieren der Ansteuerung das System in einen Sicherheitszustand schaltet.

Weitere Merkmale, Vorteile und Anwendungsmöglichkeiten der Erfindung gehen aus der folgenden Beschreibung weiterer Details anhand der beigefügten Abbildungen hervor.

Es zeigen
Fig. 1 schematisch die wichtigsten Funktionsblöcke und den Signalweg eines Regelsystems nach der Erfindung,
Fig. 2 eine graphische Darstellung zur Veranschaulichung der Sollwertverschiebung und der Regeldifferenz-Variation,
Fig. 3 in Blockdarstellung die wichtigsten Komponenten eines Regelsystems nach der Erfindung und den Signallauf,
Fig. 4 schematisch und vereinfacht die wichtigsten hydraulischen Komponenten eines Regelsystems nach der Erfindung sowie deren Zusammenschaltung und
Fig. 5 in gleicher Darstellungsweise wie Fig. 4 ein anderes Ausführungsbesipiel für die hydraulische Auslegung eines Regelsystems nach der Erfindung.

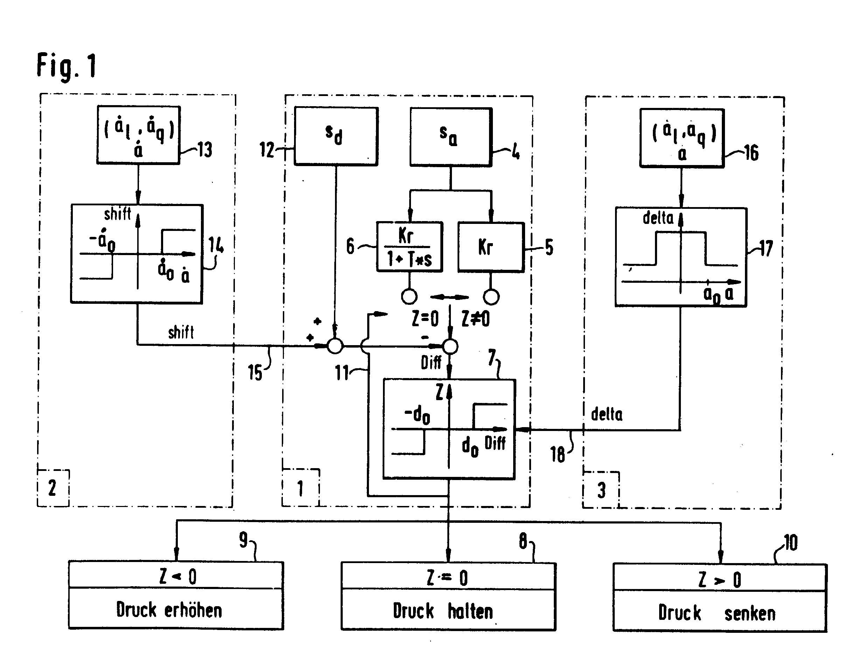

Die Darstellung der Funktionsblöcke nach Fig. 1 veranschaulicht den grundsätzlichen Aufbau eines Regelsystems nach der Erfindung. In einem Funktionsblock 1 sind die Elemente oder Schaltkreise zur Regelung der Aufbauhöhe, also der eigentliche Regler, zusammengefaßt. Die symbolisch dargestellten Komponenten bilden einen sog. strukturvariablen Regler. Die mit Hilfe von (nicht dargestellten) Dämpferwegsensoren gewonnenen Weginformationen sₐ, symbolisiert durch den Block 4, werden nämlich über einen Proportionalübertrager 5 oder über einen Tiefpaß 6 einem Schwellwert-Schaltkreis 7 zugeleitet. Das Ausgangssignal des Schaltkreises 7 steuert Ventile und veranlaßt somit - dargestellt durch die Funktionsblöcke 8,9 und 10 - ein Aufrechterhalten des momentan im Schwingungsdämpfer herrschenden Druckes 8, ein Erhöhen des Druckes 9 oder eine Druckminderung 10. Das Ausgangssignal des Schwellwert-Schaltkreises 7 wird außerdem über einen Signalweg 11 zurückgeführt, weil in dem Regler 1 der Eingang des Schaltkreises 7 in Abhängigkeit von dem Ausgangssignal dieses Schwellwert-Schaltkreises 7 nach einem vorgegebenen Algorithmus entweder an den Ausgang des Proportionalübertragers 5 oder an den Ausgang des Tiefpasses 6 angeschaltet werden soll. In der älteren deutschen Patentanmeldung DE 40 09 234 A1 ist ein solcher strukturvariabler Regler beschrieben. Grundsätzlich kommen allerdings auch andere Regler für die Aufgabe des Funktionsblockes 1 in Fig. 1 in Frage.

Das Sollniveau s_{d} wird dem Regler im Funktionsblock 1 durch das Ausgangssignal eines Schaltkreises 12 vorgegeben.

Mit Hilfe des Schwellwert-Schaltkreises 7 werden folglich die Drucksteuerventile, die die Funktionen der Blöcke 8, 9 und 10 ausüben, in Abhängigkeit von der Differenz zwischen dem Soll- und dem Istniveau (Diff = s a - s d ) angesteuert. Die zulässige Regelabweichung wird dabei durch die Schwellwerte des Schaltkreises 7 vorgegeben, die eine Reaktion auf das Eingangssignal dieses Schaltkreises, der Regeldifferenz Diff, erst zulassen, wenn ein positiver oder negativer Schwellwert delta überschritten wird. Die Ventile werden dabei in folgender Weise betätigt:
- Ist die Differenz betragsmäßig kleiner als die Schwelle delta, werden die Ventile auf Druckhalten geschaltet (8).
- Ist die Differenz größer als +delta, wird Druck abgebaut (10).
- Ist die Differenz keiner als -delta, wird der Druck erhöht (9).

In einem Funktionsblock 2 werden die Änderungen der Längs- und der Querbeschleunigung aₗ bzw. a_{q}, nämlich der Ruck ä, erfaßt und ausgewertet. Ein Schaltkreis 13 dient zur Ermittlung des Ruckes, der aus den mit Hilfe von Rad- oder Achsdrehzahlen gewonnen Informationen, aus dem Bremsdruckverlauf, dem Bremspedalweg, dem Drosselklappenwinkel des Antriebsmotors, aus dem Nickwinkel oder aus einer Kombination einiger dieser Größen abgeleitet bzw. näherungsweise errechnet werden kann.

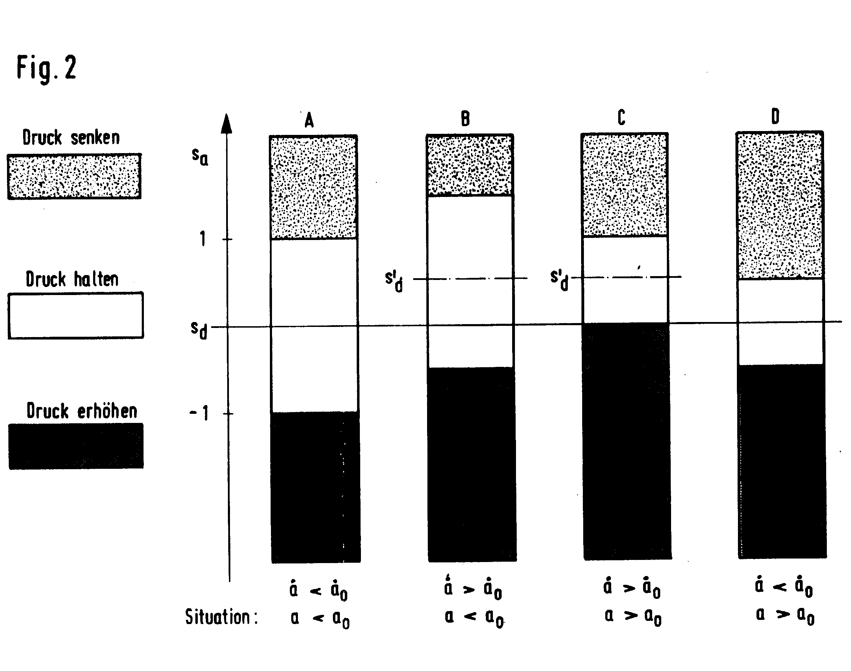

Ein Schwellwertschaltkreis 14, der an den Ausgang des zur Ermittlung des Rucks a dienenden Schaltkreises 13 angeschlosen ist, stellt fest, ob der Ruck ä innerhalb vorgegebener Grenzwerte liegt oder ob er die Schwellwerte +äₒ, -äₒ überschreitet. Sobald nämlich der Ruck a den vorgegebenen positiven oder den negativen Schwellwert über- bzw. unterschreitet, wird durch das Ausgangssignal des Schaltkreises 14 über eine Signalleitung 15 das Sollniveau s_{d}, wie anschließend anhand der Fig. 2 näher erläutert wird, angehoben oder abgesenkt, je nach Richtung des Ruckes.

Durch die Auswertung des Rucks wird festgestellt, ob eine Situation vorliegt, für die größere Aufbaubewegungen zu erwarten sind. Überschreitet der Ruck ä die vorgegebene Schwelle, wird das Soll niveau s_{d} um einen bestimmten Betrag "shift" verschoben.

Im dargestellten Ausführungsbeispiel wird der Ruck nur mit einem einzigen positiven und einem negativen Schwellwert verglichen, doch ist es durchaus auch möglich, mehrere Schwellwerte vorzusehen oder das Sollniveau kontinuierlich in Abhängigkeit von dem Ruck zu verschieben. Der zulässige Wert idₒ der Regeldifferenz Diff bzw. die zulässige Abweichung des Istwertes sₐ der Aufbauhöhe von dem Sollwert s_{d} wird bei der Verschiebung des Sollniveaus durch das Ausgangssignal des Funktionsblockes 2 nicht geändert.

Diese Toleranzbreite bzw. die zulässige Regelabweichung idₒ ist erfindungsgemäß jedoch ebenfalls variabel, und zwar in Abhängigkeit von der Längs- und Querbeschleunigung aᵢ,aq. Indem Funktionsblock3 wird nämlich die Beschleunigung a, die mit Hilfe eines Schaltkreises 16 ermittelt wird, über einen weiteren Schwellwert-Schaltkreis 17 ausgewertet. Solange die Längs-und die Querbeschleunigung aₗ, aq gering sind, wird eine relativ große Regelabweichung Diff von dem Sollwert s_{d} zugelassen. Überschreitet die Längs- und Querbeschleunigung jedoch einen vorgegebenen Grenzwert a_{o'} den der Schwellwert-Schaltkreis 17 festlegt, wird über eine Signalleitung 18 die zulässige Regelabweichung von dem Sollwert s_{d} verkleinert, um die Regelgeschwindigkeit des Niveauregelsystems zu erhöhen.

Das Zusammenspiel der verschiedenen, anhand der Fig. 1 erläuterten Schwellwerte wird nun anhand der graphischen Darstellung in Fig. 2 erläutert. Die vier Säulen zeigen verschiedene Situationen A-D. In der ersten Situation A sind sowohl der Ruck a als auch die Beschleunigung kleiner als die maßgeblichen Schwellen. In dieser Situationm kommt die Grundeinstellung zum Tragen, bei der der Dämpferweg oder der Istwert sₐ innerhalb der Grenzen ±1 schwanken kann, ohne daß der Regler eine Druckänderung bewirkt. Überschreitet der Istwert sₐ den Wert "1 ", veranlaßt der Regler eine Druckreduzierung, während bei Unterschreiten des Istwertes sₐ = "-1" der Druck erhöht wird.

Die Situation A beschreibt die Ausgangslage. Der Druckhaltebereich ist symmetrisch zum Sollwert oder zur Sollage s_{d}. Es ist eine relativ große zulässige Regelabweichung gegeben, was zu einer Minimierung der Reglertätigkeit infolge von Störgrößen führt.

Überschreitet nun der Ruck ä in der Situation B den vorgegebenen Schwellwert äₒ, was durch den Schwellwert-Schaltkreis 14 in Fig. 1 erkannt wird, wird der Sollwert s_{d} auf s'_{d} angehoben. Der Druckhaltebereich wird also nach oben verschoben. Damit wird erreicht, daß schon frühzeitig mit der Druckaufbauphase begonnen wird, weil wegen der Änderung der Beschleunigung grö-βere Aufbaubewegungen zu erwarten sind, die zu diesem Zeitpunkt noch durch die Schwingungsdämpfer abgefangen werden.

Bei nach wie vor großem Ruck a und nun auch gro-βer Beschleunigung a wird in der Situation C die Verschiebung des Sollwertes _{Sd} auf s'_{d} beibehalten, weil zu erwarten ist, daß noch zusätzliche Trägheitskräfte aufgenommen werden müssen, und gleichzeitig die zulässige Regelabweichung verkleinert bzw. in dem dargestellten Ausführungsbeispiel halbiert. Durch diese Maßnahme wird die Regelgeschwindigkeit erhöht, damit der Sollwert s'_{d} schnell wieder erreicht wird. Sinkt nun der Ruck ä in der Situation D unter den vorgegebenen Schwellwert, weil z.B. näherungsweise stationäre Kurvenfahrt eingetreten ist, wird das Sollniveau s'_{d}, wieder auf den Ausgangswert s_{d} verschoben und damit der Druckhaltebereich wieder symmetrisch um das Sollniveau s_{d} angeordnet. Anderenfalls könnte eine Überkompensation der Wankbewegung eintreten. Zur Gewährleistung einer hohen Regelgüte wird in der Situation D die verringerte zulässige Regelabweichung zunächst beibehalten.

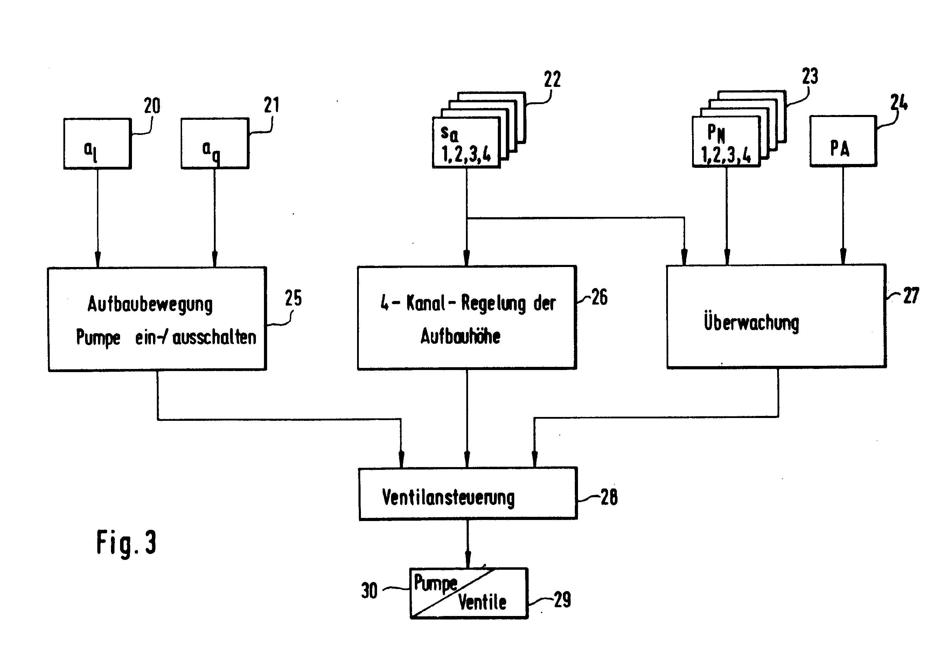

Das anhand der Fig. 1 und 2 erläuterte Regelprinzip gilt praktisch für jeden einzelnen Kanal eines vollständigen Regelsystems nach der Erfindung, das im allgemeinn als Vier-Kanal-Niveauregelsystem ausgebildet ist. Das Zusammenwirken der einzelnen Komponenten dieses Vier-Kanal-Regelsystems zeigt Fig. 3. Die wichtigsten Komponenten des Systems sind Sensoren und Sensorschaltkreise 20 bis 24 verschiedener Art, Auswerteschaltkreise 25,26 und 27, die die Sensorsignale verarbeiten und über eine Ventilansteuereinheit 28 die Ventile 29 betätigen, die durch Konstanthalten des Drukkes, Druckaufbau oder Druckabbau die Niveauhöhe in den vier Kanälen bestimmen. Dem Ventilblock 29 sind noch eine oder mehrere Pumpen 30 zugeordnet, die den benötigten Druck oder Hilfsdruck zur Einstellung der gewünschten Aufbauhöhe in den vier Kanälen erzeugen.

Die Signalauswertung und -verarbeitung läßt sich in drei Blöcke 25,26,27 aufteilen. In dem Block 25 werden die Bewegungen des Fahrzeugaufbaus durch Auswertung der von den Sensoren und Sensor-Schaltkreisen 20,21 gelieferten Informationen ermittelt. Es werden die Fahrzeuglängs- und Querbeschleunigungen aₗ bzw. aq ermittelt. Auch wenn noch keine Aufbaubewegungen auftreten, wird beim Überschreiten von Beschleunigungs- oder Ruckschwellwerten die Pumpe 30 durch das Ausgangssignal des Schaltkreises 25 bereits aktiviert, um Totzeiten zu kompensieren.

In dem Block26 ist die eigentliche Vier-Kanal-Regelung der Aufbauhöhe untergebracht. 22 bezeichnet die Wegsensoren; an jedem Rad oder Schwingungsdämpfer ist ein Wegsensor angeordnet, dessen Ausgangssignal die Informationen über die Relativwege zwischen dem Rad und dem Fahrzeugaufbau enthält. Unter Verwendung von Filteralgorithmen wird eine radindividuelle Regelung der Aufbauhöhe vorgenommen.

Der dritte Block 27 dient zur Überwachung des Regelungssystems. Mit den Schaltkreisen, die dieser Block 27 enthält, werden die Wegsensor-Signale (22), die Ausgangssignale der Sensoren 23, die den Druck in den einzelnen Stoßdämpfern ermitteln, sowie der von dem Sensor 24 festgestellte Speicherdruck ausgewertet. Durch logische Verknüpfung der Signale und Anwendung von Plausibilitätsbetrachtungen läßt sich aus den dem Überwachungsschaltkreis 27 zugeführten Informationen erkennen, ob das Niveauregelsystem intakt ist oder ob ein Fehler vorliegen muß. Bei Fehlererkennung wird ein entsprechendes Signal ausgelöst. Außerdem werden im Fehlerfall über die Ventilansteuereinheit 28 die Ventile im Ventilblock 29 in einen Sicherheitszustand geschaltet.

Es ist auch ein Verbund des erfindungsgemäßen Regelsystems mit ABS/ASR-Systemen und/oder mit einer Dämpfkraftregelung möglich. In diesem Fall lassen sich vor allem die Sensoren für die verschiedenen Systeme ausnutzen. Bei Verzicht auf Sensoren zur Ermittlung der Längs- und Querbeschleunigung des Aufbaus kann man nun aus dem Lenkwinkel, dem Bremsdruck, dem Bremspedalweg, dem Drosselklappenwinkel usw. die Beschleunigungsgrößen ableiten. Dadurch wird der Herstellungsaufwand verringert.

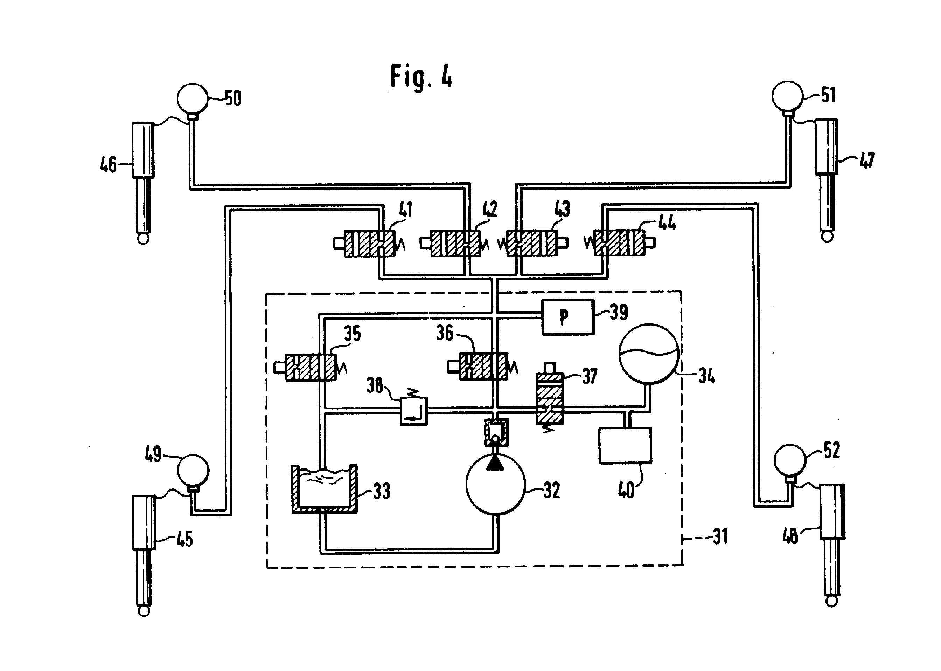

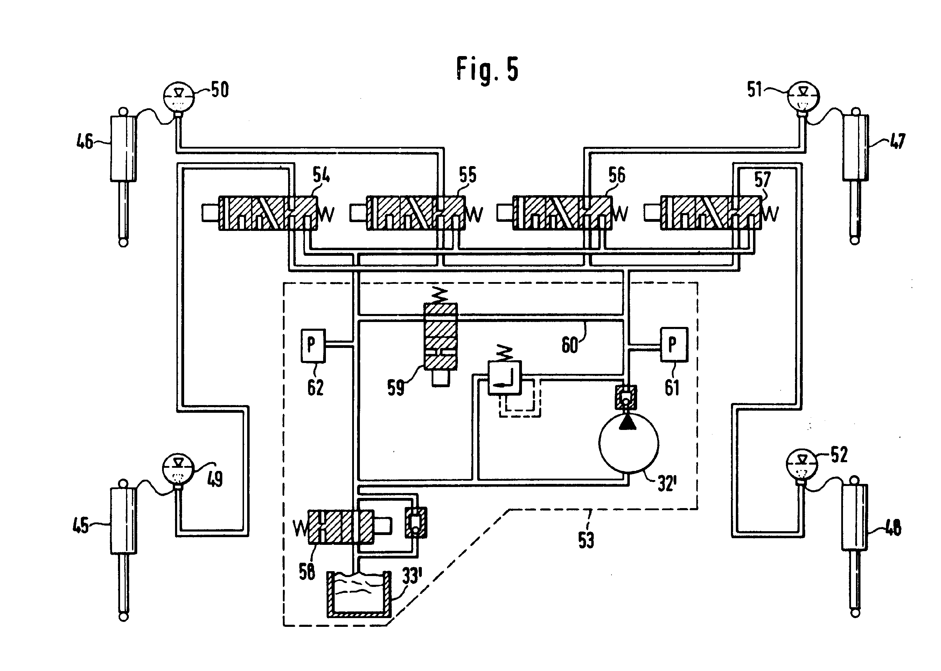

Die Fig. 4 und 5 zeigen schließlich zwei Möglichkeiten zur Ausgestaltung des hydraulischen Systems, mit dem die Niveauhöhenregelung mit Hilfe der in den Regelschaltkreisen ausgewerteten Informationen und der in diesen Schaltkreisen erzeugten Stellsignale ausgeführt werden kann. In dem Ausführungsbeispiel nach Fig. 4 ist ein zentrales Druckversorgungssystem 31 vorgesehen, das eine zentrale Hydraulikpumpe 32, einen Druckausgleichsbehälter 33 und einen zentralen Druckspeicher 34 umfaßt. Zu dem Druckversorgungssystem 31 gehören ferner drei Hydraulikventile 35,36,37, ein Überdruckventil 38 und ein Drucksensor 39. Außerdem ist ein Drucküberwachungsschalter 40 an den Druckspeicher 34 angeschlossen. Das Druckversorgungssystem 31 ist über je ein in der Ruhestellung gesperrtes, auf Durchlaß umschaltbares Hydraulikventil 41 bis 44 mit den einzelnen Rädern bzw. mit den einzelnen Schwingungsdämpfern 45 bis 48 und den zugehörigen Druckbehältern 49 bis 52 verbunden. Für die Ventilstelllungen sind fünf verschiedene Zustände zu unterscheiden. Im Ruhezustand - druckloser Umlauf - nehmen die Ventile die in Fig. 4 dargestellten Schaltpositionen ein. Wird die Regelung aktiviert, wird zuerst das Rad mit der größten Sollwertüberschreitung und dasjenige mit der größten Sollwertunterschreitung ermittelt. Abhängig von den Drücken in den beiden betrachten Schwingungsdämpfern, dem Speicherdruck und den absoluten Regelabweichungen werden die Zustände: Druckausgleich, Druckabbau, Druckaufbau-ohne-Speicher bzw. Druckaufbaumit-Speicher angesteuert. Die dargestellte Ventilanordnung erlaubt es, daß während der Phase Druckabbau der Speicher gleichzeitig geladen werden kann.

Bei dem Ausführungsbeispiel nach Fig. 5, die ohne einen zentralen Druckspeicher auskommt, werden in den Wegen von dem zentralen Druckversorgungssystem 53 zu den einzelnen Schwingungsdämpfern 45 - 48 Mehrwegeventile 54 bis 57 mit je drei Schaltpositionen verwendet. Außerdem befindet sich ein 2/2-Wegeventil 58 im Anschlußweg des zentralen Druckausgleichsbehälters 33'. Über ein weiteres 2/2-Wegeventil 59 in einer Druckmittelleitung 60 ist die Saugseite der Pumpe 32' in der Grundstellung an den Behälter 33' angeschlossen.

Drucksensoren 61,62 gehören zum Überwachungssystem.

Die in Fig. 5 dargestellte Variante zeichnet sich dadurch aus, daß für die Fälle Wank- oder Nickkompensation (Druckmittelweg zum Druckausgleichbehälter 33' durch Umschalten des Ventils 58 unterbrochen), immer zwei Kanäle gleichzeitig geregelt werden, nämlich derjenige mit der größten Sollwertüberschreitung und derjenige mit der größten Sollwertunterschreitung.

## Patentansprüche

1. Niveauregelsystem für Kraftfahrzeuge, bestehend im wesentlichen aus Schwingungsdämpfern (45 - 48), die zwischen den einzelnen Rädern und dem Fahrzeugaufbau angeordnet sind, aus elektrisch betätigbaren Ventilen (35 - 37,41 - 44,54 - 59)), mit denen ein Druckmittelfluß zwischen einer Druckquelle (32,32',34), einem drucklosen Speicher (33,33'), den Schwingungsdämpfern (45 - 48) und den einzelnen Schwingungsdämpfern zugeordneten Druckbehältern (49 - 52) steuerbar ist, aus Wegsensoren zur Ermittlung der Aufbauhöhe (sₐ) und Aufbaubewegungen, aus Sensoren zur direkten oder indirekten Ermittlung der Längs- und der Querbeschleunigung des Fahrzeugaufbaus sowie aus einer elektrischen Schaltungsanordnung (1 - 3), die die Längs- und Querbeschleunigung auswertende Schaltkreise (2,3) und eine Regelschaltung (1) enthält, welche in Abhängigkeit von einem Sollwert (s_{d}) der Aufbauhöhe und dem Istwert (sₐ) der Aufbauhöhe des Fahrzeugs unter Berücksichtigung einer zulässigen Abweichung zwischen Soll- und Istwert Signale für die Betätigung der Ventile erzeugt, wobei der Sollwert der Aufbauhöhe (s_{d}) nach Betrag und Richtung in Abhängigkeit von den ausgewerteten Sensorsignalen variierbar ist, dadurch gekennzeichnet, daß der die Längs- und Querbeschleunigungssignale auswertende Schaltkreis (2) die zeitliche Änderung der Längs- und der Querbeschleunigung, den sogen. Ruck (ä), des Fahrzeugaufbaues ermittelt und ein Ausgangssignal (shift) erzeugt, das der Regelschaltung (1) zugeführt wird und den Sollwert der Aufbauhöhe (s_{d}) verschiebt, wenn der Ruck (ä) einen Schwellwert (± aₒ) überschreitet, wobei die Verschiebungsrichtung von der Änderungsrichtung abhängig ist, und daß in einem weiteren Schaltkreis (3) zur Auswertung der Sensorsignale ein von der Längs- und Querbeschleunigung (a) des Fahrzeugaufbaues abhängiges Ausgangssignal gebildet und der Regelschaltung (1) zugeführt wird, das einen Schwellwert für die zulässige Abweichung des Istwertes (sₐ) von dem Sollwert (s_{d}) der Aufbauhöhe oder für die zulässige Regeldifferenz (± dₒ) variiert.

2. Niveauregelsystem nach Anspruch 1, dadurch gekennzeichnet, daß der den Ruck (ä) auswertende Schaltkreis (2) den Sollwert der Aufbauhöhe (s_{d}) um einen vorgegebenen Betrag anhebt bzw. absenkt, sobald der Ruck (a) einen vorgegebenen positiven bzw. negativen Schwellwert (± äₒ) überschreitet.

3. Niveauregelsystem nach Anspruch 2, dadurch gekennzeichnet, daß für den Ruck (ä) und für die Verschiebung des Sollwertes (s_{d}) der Aufbauhöhe jeweils Schwellwerte (± äₒ) unterschiedlicher Höhe vorgegeben sind und daß der den Ruck (ä) auswertende Schaltkreis (2) den Sollwert der Aufbauhöhe (s_{d}) um einen von dem überschrittenen Schwellwert des Rucks (ä) abhängigen Schwellwert verschiebt.

4. Niveauregelsystem nach einem oder mehreren der Ansprüche 1 bis 3, dadurch gekennzeichnet, daß bei einem durch den Schaltkreis (2), der den Ruck (ä) auswertet, hervorgerufenen Verschieben des Sollwerts (_{Sd}) der Aufbauhöhe die zulässige Regelabweichung von dem Sollwert oder Regeldifferenz (±dₒ) erhalten bleibt.

5. Niveauregelsystem nach einem oder mehreren der Ansprüche 1 bis 4, dadurch gekennzeichnet, daß die zulässige Regelabweichung oder Regeldifferenz (± dₒ) um einen vorgegebenen Wert verringert wird, wenn die Längs- und Querbeschleunigung (a) einen vorgegebenen Schwellwert (± a") überschreitet.

6. Niveauregelsystem nach einem oder mehreren der Ansprüche 1 bis 4, dadurch gekennzeichnet, daß die zulässige Regelabweichung oder Regeldifferenz (±dₒ) kontinuierlich oder in mehreren Stufen in Abhängigkeit von entsprechenden Werten der Längs- und Querbeschleunigung (a) verringert und/oder erhöht wird.

7. Niveauregelsystem nach einem oder mehreren der Ansprüche 1 bis 6, dadurch gekennzeichnet, daß die Längsbeschleunigung (aᵢ) und die Änderung (aᵢ) der Längsbeschleunigung des Fahrzeugaufbaus aus mit Hilfe von Rad- oder Achsdrehzahlsensoren gewonnenen Meßwerten errechnet oder abgeleitet werden.

8. Niveauregelsystem nach einem oder mehreren der Ansprüche 1 bis 7, dadurch gekennzeichnet, daß die Änderung (aₗ) der Längsbeschleunigung (aᵢ) des Fahrzeugaufbaus aus dem Bremsdruckverlauf, dem Bremspedalweg, aus dem Drosselklappenwinkel des Fahrzeugantriebsmotors oder aus dem Nickwinkel oder aus einer Kombination dieser Meßwerte näherungsweise abgeleitet wird.

9. Niveauregelsystem nach einem oder mehreren der Ansprüche 1 bis 8, dadurch gekennzeichnet, daß die Querbeschleunigung (aq)und die Änderung (äq) der Querbeschleunigung des Fahrzeugaufbaus aus der Längswinkelgeschwindigkeit und der Fahrzeuggeschwindigkeit oder aus dem Rollwinkel oder aus einer Kombination dieser Meßwerte abgeleitet wird.

10. Niveauregelsystem nach einem oder mehreren der Ansprüche 1 bis 9, dadurch gekennzeichnet, daß der den Ruck (a) auswertende Schaltkreis (2) die Druckquelle aktiviert, z.B. durch Einschalten einer Druckmittelpumpe (30), sobald der Ruck (a) einen vorgegebenen Schwellwert (± aₒ) überschreitet.

11. Niveauregelsystem nach einem oder mehreren der Ansprüche 1 bis 10, dadurch gekennzeichnet, daß diese als Vier-Kanal-Regelsystem ausgebildet ist, wobei an jedem Rad ein Wegsensor (22) angeordnet und die Aufbauhöhe (_{Sa1},₂,₃,₄) an jedem Rad individuell regelbar ist.

12. Niveauregelsystem nach Anspruch 11, dadurch gekennzeichnet, daß dieses ein zentrales Druckversorgungssystem (31) mit einer elektromotorisch angetriebenen Hydraulikpumpe (32), mit einem Druckspeicher (34), mit einem Druckausgleichsbehälter (33) und mit in den Anschlüssen zur Hydraulikpumpe, zum Druckspeicher und zum Druckausgleichsbehälter eingefügten Hydraulikventilen (35-37) besitzt und daß das Druckversorgungssystem (31) über je ein in der Ruhestellung gesperrtes, auf Durchlaß umschaltbares Hydraulikventil (41-44) an die einzelnen Schwingungsdämpfer (45-48) mit den zugehörigen Druckbehältern (49-52) angeschlossen ist.

13. Niveauregelsystem nach Anspruch 11, dadurch gekennzeichnet, daß dieses ein zentrales Druckversorgungssystem (53) mit einer Hydraulikpumpe (32'), mit einem Druckausgleichsbehälter (33') und mit einem Hydraulikventil (58) in der Anschlußleitung des Druckausgleichsbehälters (33') besitzt und daß das Druckversorgungssystem (53) über je ein in der Ruhestellung gesperrtes Hydraulikventil (54-

57) an die einzelnen Schwingungsdämpfer (45-48) angeschlossen ist, wobei in einer zweiten Schaltstellung der Hydraulikventile (54-57) der Schwingungsdämpfer (45-48) mit dem Druckausgleichsbehälter (33') und in einer dritten Schaltstellung die Hydraulikpumpe (32') mit den Schwingungsdämpfern (45-48) verbunden sind.

14. Niveauregelsystem nach Anspruch 13, dadurch gekennzeichnet, daß in einer von der Druckseite der Hydraulikpumpe (32') zu dem Druckausgleichsbehälter (33') führenden Leitung (60) und unmittelbar vor dem Anschluß des Druckausgleichsbehälters (33') je ein in der Ruhestellung auf Durchlaß geschaltetes Trennventil (59,58) eingefügt sind.

15. Niveauregelsystem nach Anspruch 14, dadurch gekennzeichnet, daß an der Druckseite der Hydraulikpumpe (32') und vor dem Trennventil (58), das zu dem Druckausgleichsbehälter (33') führt, jeweils ein Drucksensor (61,62) angeschlossen ist.

16. Niveauregelsystem nach einem oder mehreren der Ansprüche 1 bis 15, dadurch gekennzeichnet, daß dieses mit einem Überwachungsschaltkreis (27) ausgerüstet ist, der die mit Hilfe der Wegsensoren (22') ermittelten Aufbauhöhen und Aufbaubewegungen, den Druckverlauf oder Druckänderungen im Niveauregelsystem, z.B. in den einzelnen Druckbehältern oder in einem zentralen Druckspeicher (34), auswertet und, wenn auf Fehler hinweisende Meßwerte oder Vergleichswerte auftreten, ein Fehlersignal auslöst, das durch Ansteuern der Hydraulikventile oder Blockieren der Ansteuerung das System in einen Sicherheitszustand schaltet.

## Claims

1. A level control system for automotive vehicles which substantially includes vibration absorbers (45-48) positioned between the individual wheels and the vehicle body, electrically actuatable valves (35-37, 41-44, 54-59) serving to control a flow of pressure fluid between a pressure source (32, 32', 34), a pressureless accumulator (33, 33'), the vibration absorbers (45-48) and pressure reservoirs (49-52) which are associated with the individual vibration absorbers (45-48), travel sensors for the detection of the vehicle body height (sₐ) and the movements of the vehicle body, sensors for the direct or indirect detection of the longitudinal and transverse accelerations of the vehicle body, and an electric circuit configuration (1-3) which includes circuits (2,3) evaluating the longitudinal and transverse accelerations and a control circuit (1) which generates valve actuating signals depending on a set value (s_{d}) and on the actual value (sₐ) of the height of the vehicle body taking into account an admissible deviation between the set value and the actual value, the set value of the vehicle body height (s_{d}), in its amount and direction, being variable in response to the evaluated sensor signals,
characterized in that the circuit (2) which evaluates the longitudinal and transverse acceleration signals determines the timely variation of the longitudinal acceleration and the transverse acceleration, the so- called jerk (a), of the vehicle body and generates an output signal (shift) which is delivered to the control circuit (1) and shifts the set value of the vehicle body height (s_{d}) if the jerk (a) exceeds a threshold value (±aₒ), the direction of the shift depending on the direction of the variation, and in that in another circuit (3) an output signal responsive to the longitudinal and transverse accelerations (a) of the vehicle body is produced for evaluating the sensor signals and is delivered to the control circuit (1) to vary a threshold value for the admissible deviation of the actual value (sₐ) from the set value (s_{d}) of the vehicle body height or for the admissible control difference (±dₒ).

2. A level control system as claimed in claim 1, characterized in that the circuit (2) evaluating the jerk (a) raises or lowers the set value of the vehicle body height (s_{d}) by a preset amount as soon as the jerk (a) exceeds a preset positive or negative threshold value (±aₒ).

3. A level control system as claimed in claim 2, characterized in that threshold values (±aₒ) of different magnitudes are predetermined for the jerk (a) and for the shift of the set value value (s_{d}) of the vehicle body height, and in that the circuit (2) evaluating the jerk (a) shifts the set value of the vehicle body height (s_{d}) by a threshold value responsive to the exceeded threshold value of the jerk (a).

4. A level control system as claimed in anyone or several of claims 1 to 3,
characterized in that in the event of a shift of the set value (_{Sd}) of the vehicle body height caused by the circuit (2) which evaluates the jerk (a), the admissible control deviation from the set value or control difference (±do) is preserved.

5. A level control system as claimed in anyone or several of claims 1 to 4,
characterized in that the admissible control deviation or control difference (±do) is reduced by a preset value if the longitudinal and transverse accelerations (a) exceed a preset threshold value (±aₒ).

6. A level control system as claimed in anyone or several of claims 1 to 4,
characterized in that the admissible control deviation or control difference (±dₒ) is reduced and/or increased continuously or in a plurality of stages depending on corresponding values of the longitudinal and transverse accelerations (a).

7. A level control system as claimed in anyone or several of claims 1 to 6,
characterized in that the longitudinal acceleration (aᵢ) and the variation (aᵢ) of the longitudinal acceleration of the vehicle body are calculated or derived from measured values obtained by way of wheel sensors or axle-rate-of-revolutions sensors.

8. A level control system as claimed in anyone or several of claims 1 to 7,
characterized in that the variation (a ₁) of the longitudinal acceleration (aᵢ) of the vehicle body is derived in approximation from the brake pressure variation, the brake pedal travel, the throttle angle of the driving engine of the vehicle or the diving angle, or from a combination of these measured values.

9. A level control system as claimed in anyone or several of claims 1 to 8,
characterized in that the transverse acceleration (aq) and the variation of the transverse acceleration (aq) of the vehicle body is determined from the longitudinal angle speed and the vehicle speed, or from the rolling angle, or a combination of these measured values.

10. A level control system as claimed in anyone or several of claims 1 to 9,
characterized in that the circuit (2) which evaluates the jerk (a) activates the pressure source, for example by switching on a pressure fluid pump (30) as soon as the jerk (a) exceeds a preset threshold value (±ao)

11. A level control system as claimed in anyone or several of claims 1 to 10,
characterized in that it is configured as a four-channel control system, one travel sensor (22) being provided on each wheel and the vehicle body height (S_{a1,2,3,4}) being controllable individually on each wheel.

12. A level control system as claimed in claim 11, characterized in that it includes a central pressure supply system (31) with a hydraulic pump (32) driven by an electric motor, a pressure accumulator (34), a pressure balancing tank (33) and hydraulic valves (35-37) which are inserted in the connections extending to the hydraulic pump, the pressure accumulator and the pressure balancing tank, and in that the pressure supply system (31) is connected to the individual vibration absorbers (45-48) with the associated pressure reservoirs (49-52) by way of one each hydraulic valve (41-44) which is closed in the normal position and is commutatable to open passage.

13. A level control system as claimed in claim 11,
characterized in that it includes a central pressure supply system (53) with a hydraulic pump (32'), a pressure balancing tank (33') and a hydraulic valve (58) in the connecting line of the pressure balancing tank (33'), and in that the pressure supply system (53) is connected to the individual vibration absorbers (45-48) by way of one each normally closed hydraulic valve (54-57), and in a second switching position of the hydraulic valves (54-57) the vibration absorbers (45-48) are connected to the pressure balancing tank (33') and in a third switching position the hydraulic pump (32') is connected to the vibration absorbers (45-48).

14. A level control system as claimed in claim 13, characterized in that one each normally open separating valve (59, 58) is inserted in a line (60) leading from the delivery side of the hydraulic pump (32') to the pressure balancing tank (33') and directly upstream of the connection of the pressure balancing tank (33').

15. A level control system as claimed in claim 14, characterized in that one each pressure sensor (61, 62) is connected to the delivery side of the hydraulic pump (32) and in front of the separating valve (58) which leads to the pressure balancing tank (33').

16. A level control system as claimed in anyone or several of claims 1 to 15,
characterized in that it includes a supervisory circuit (27) which evaluates the vehicle body heights and the vehicle body movements being detected by way of the travel sensors (22'), the pressure course or pressure variations in the level control system, for example, in the individual pressure reservoirs or in a central pressure accumulator (34), and which triggers an error signal if measured values or comparative values occur that indicate errors, which error signal switches the system into a safety condition by actuating the hydraulic valves or by locking of the actuation.

## Revendications

1. Système de correction d'assiette pour véhicule automobile, constitué, pour l'essentiel, d'amortisseurs de vibrations (45-48), qui sont disposés entre les différentes roues et la structure du véhicule, de valves à actionnement électrique (35-37, 41-44, 54-59), au moyen desquelles un flux d'agent de pression peut être commandé entre une source de pression (32, 32', 34), un accumulateur sans pression (33, 33'), les amortisseurs de vibrations (45-48) et des réservoirs de pression (49-52) associés aux différents amortisseurs de vibrations, de capteurs de course, servant à relever la hauteur de structure (sa) et les déplacements de structure, de capteurs, servant à relever directement ou indirectement l'accélération longitudinale et l'accélération transversale de la structure de véhicule, et d'un agencement de circuit électrique (1 -3) qui contient les circuits (2, 3) exploitant l'accélération longitudinale et l'accélération transversale et un circuit correcteur (1) qui produit des signaux d'actionnement des valves en fonction d'une valeur de consigne (s_{d}) de la hauteur de structure du véhicule et de la valeur réelle (sa) de cette hauteur de structure et en tenant compte d'un écart admissible entre la valeur de consigne et la valeur réelle, tandis que la valeur de consigne de la hauteur de structure (s_{d}) peut faire l'objet d'une variation, en valeur et en sens, en fonction des signaux de capteur exploités, caractérisé en ce que le circuit (2) exploitant les signaux d'accélération longitudinale et d'accélération transversale relève la variation de l'accélération longitudinale et de l'accélération transversale de la structure de véhicule dans le temps, qu'il est convenu d'appeler suraccélération (a), et produit un signal de sortie "shift" (décalage) qui est envoyé au circuit de correction (1) et décale la valeur de consigne de la hauteur de structure (s_{d}) lorsque la suraccélération (a) franchit une valeur de seuil (+/- aₒ) par valeurs absolues croissantes, le sens du décalage dépendant du sens de la variation, et en ce que, dans un autre circuit (3) destiné à exploiter les signaux de capteur, un signal de sortie dépendant de l'accélération longitudinale et de l'accélération transversale (a) de la structure de véhicule est formé et est envoyé au circuit de correction (1), ce signal de sortie faisant varier une valeur de seuil correspondant à l'écart admissible de la valeur réelle (sa) vis-à-vis de la valeur de consigne (s_{d}) de la hauteur de structure ou à la différence admissible de correction (+/- dₒ).

2. Système de correction d'assiette, selon la revendication 1, caractérisé en ce que le circuit (2) exploitant la suraccélération (a) respectivement rehausse ou abaisse la valeur de consigne de la hauteur de structure (s_{d}), d'une valeur préfixée, dès que la suraccélération (a) franchit par valeurs absolues croissantes une valeur de seuil positive ou négative (+/- aₒ) préfixée.

3. Système de correction d'assiette selon la revendication 2, caractérisé en ce qu'il est prévu, respectivement pour la suraccélération (a) et pour le décalage de la valeur de consigne (s_{d}) de la hauteur de structure, des valeurs de seuil (+/- aₒ) correspondantes qui ont des niveaux différents et en ce que le circuit (2) exploitant la suraccélération (a) décale la valeur de consigne de la hauteur de structure (s_{d}) d'une valeur de seuil qui dépend de la valeur de seuil de la suraccélération (a) qui a été franchie par valeurs absolues croissantes.

4. Système de correction d'assiette selon une ou plusieurs des revendications 1 à 3, caractérisé en ce que, dans le cas d'un décalage de la valeur de consigne (s_{d}) de la hauteur de structure qui est provoqué par le circuit (2) qui exploite la suraccélération (a), l'écart admissible de correction vis-à-vis de la valeur de consigne, ou différence de correction (+/dₒ), est maintenu.

5. Système de correction d'assiette selon une ou plusieurs des revendications 1 à 4, caractérisé en ce que l'écart de correction ou différence de correction (+/- dₒ) admissible est réduit d'une valeur préfixée lorsque l'accélération longitudinale et l'accélération transversale (a) franchissent par valeurs absolues croissantes une valeur de seuil (+/- aₒ) préfixée.

6. Système de correction d'assiette selon une ou plusieurs des revendications 1 à 4, caractérisé en ce que l'écart de correction ou différence de correction (+/- dₒ) admissible est réduit et/ou augmenté, d'une manière continue ou en plusieurs étapes, en fonction de valeurs correspondantes de l'accélération longitudinale et de l'accélération transversale (a).

7. Système de correction d'assiette selon une ou plusieurs des revendications 1 à 6, caractérisé en ce que l'accélération longitudinale (aᵢ) de la structure de véhicule et la variation (a₁) de l'accélération longitudinale sont calculées ou déduites de valeurs mesurées obtenues au moyen de capteurs de vitesse de rotation de roue ou d'essieu.

8. Système de correction d'assiette selon une ou plusieurs des revendications 1 à 7, caractérisé en ce que la variation (a Ü de l'accélération longitudinale (aᵢ) de la structure de véhicule est déduite d'une manière approximative du profil de variation dans le temps de la pression de freinage, de la course de la pédale de frein, de l'angle de papillon des gaz du moteur d'entraînement du véhicule ou de l'angle de tangage, ou d'une combinaison de ces valeurs mesurées.

9. Système de correction d'assiette selon une ou plusieurs des revendications 1 à 8, caractérisé en ce que 1 'accélération transversale (aq) et la variation (aq) de l'accélération transversale de la structure de véhicule sont déduites de la vitesse angulaire longitudinale et de la vitesse du véhicule ou à partir de l'angle de roulis, ou à partir d'une combinaison de ces valeurs mesurées.

10. Système de correction d'assiette selon une ou plusieurs des revendications 1 à 9, caractérisé en ce que le circuit (2) exploitant la suraccélération (a) active la source de pression, par exemple par mise en marche d'une pompe d'agent de pression (30), dès que la suraccélération (a) franchit par valeurs absolues croissantes une valeur de seuil (+/- aₒ) préfixée.

11. Sysème de correction d'assiette selon une ou plusieurs des revendications 1 à 10, caractérisé en ce que ce système est réalisé sous forme d'un système de correction à quatre canaux, un capteur de course (22) respectif étant disposé sur chaque roue et la hauteur de structure (_{Sa1},₂,₃,₄) pouvant être réglée individuellement sur chaque roue.

12. Système de correction d'assiette selon la revendication 11, caractérisé en ce que ce système comprend un dispositif central de fourniture de pression (31), comportant une pompe hydraulique (32) entraînée par un moteur électrique, un accumulateur central de pression (34), un réservoir de compensation de pression (33) et des valves hydrauliques (35-37) insérées dans les liaisons avec la pompe hydraulique, l'accumulateur de pression et le réservoir de compensation de pression et en ce que le dispositif de fourniture de pression (31) est raccordé aux différents amortisseurs de vibrations (45-48), et aux réservoirs de pression (49-52) associés, par l'intermédiaire de valves hydrauliques (41-44) respectives qui, dans la position de repos, sont fermées et qui sont agencées de façon à pouvoir être commutées en position de passage.

13. Système de correction d'assiette selon la revendication 11, caractérisé en ce que ce système comprend un dispositif central de fourniture de pression (53) comportant une pompe hydraulique (32'), un réservoir de compensation de pression (33') et une valve hydraulique (58) disposée dans la conduite de liaison avec le réservoir de compensation de pression (33') et en ce que le dispositif de fourniture de pression (53) est raccordé aux différents amortisseurs de vibrations (45-48) par l'intermédiaire de valves hydrauliques (54-57) respectives qui, dans la position de repos, sont fermées, tandis que, dans une deuxième position de commutation des valves hydrauliques (54-57), l'amortisseur de vibrations (45-48) est relié au réservoir de compensation de pression (33') et, dans une troisième position de commutation, la pompe hydraulique (32') est reliée aux amortisseurs de vibrations (45-48).

14. Système de correction d'assiette selon la revendication 11, caractérisé en ce qu'il est prévu, insérées respectivement dans une conduite (60) menant du côté de refoulement de la pompe hydraulique (32') au réservoir de compensation de pression (33') et directement en avant de la liaison avec le réservoir de compensation de pression (33'), des valves d'isolement (59, 58) correspondantes qui, dans la position de repos, sont commutées en position de passage.

15. Système de correction d'assiette selon la revendication 14, caractérisé en ce qu'il est prévu, disposés respectivement sur le côté de refoulement de la pompe hydraulique (32') et en avant de la valve d'isolement (58) qui mène au réservoir de compensation de pression (33'), des capteurs de pression (61, 62) correspondants.

16. Système de correction d'assiette selon une ou plusieurs des revendications 1 à 15, caractérisé en ce que ce système est pourvu d'un circuit de surveillance (27) qui exploite les hauteurs de structure et déplacements de structure relevés au moyen de capteurs de course (22'), le profit de variation de pression dans le temps ou les variations de pression dans le système de correction d'assiette, par exemple dans les différents réservoirs de pression ou dans un réservoir central de pression (34), et qui, lorsqu'il apparaît des valeurs de mesure ou des valeurs de comparaison indiquant une erreur, délivre un signal d'erreur qui fait commuter le système dans un état de sécurité en commandant les valves hydrauliques ou en bloquant la commande.
